# FASCICULE DE BREVET EUROPEEN

(11) **EP 4 610 501 B1**
(45) Date de publication et mention de la délivrance du brevet: **09.09.2026**
(21) Numéro de dépôt: 25160163.9
(22) Date de dépôt: 26.02.2025
(51) Int. Cl.: F16B 5/01, F16B 37/04, F16B 5/06

(54) **ASSEMBLAGE D'UN PANNEAU SANDWICH À UNE STRUCTURE**
VERBINDUNG EINER SANDWICHPLATTE MIT EINER STRUKTUR
ASSEMBLY OF A SANDWICH PANEL TO A STRUCTURE

(30) Priorité: 28.02.2024 FR 2401982
(43) Date de publication de la demande: 03.09.2025
(73) Titulaire: AIRBUS OPERATIONS, 31060 Toulouse Cedex 9 (FR)
(72) Inventeur: MILLET, Gérard, 31060 TOULOUSE (FR); DELPY, Vincent, 31060 TOULOUSE (FR)
(74) Mandataire: Cabinet Le Guen Maillet

(56) Documents cités:
- WO-A1-2007/036673
- US-A1- 2013 269 152
- US-A1- 2016 003 271
- US-A1- 2017 080 674
- US-B2- 9 850 927

## Description

### DOMAINE TECHNIQUE

La présente invention concerne un assemblage particulier qui associe un panneau sandwich à une structure, où le panneau sandwich comporte un moyen d'accrochage permettant la fixation d'un outil afin d'aider au retrait du panneau sandwich, ainsi qu'un tel outil, et un aéronef comportant un tel assemblage.

### ÉTAT DE LA TECHNIQUE ANTÉRIEURE

Une cabine d'un aéronef comporte classiquement une structure avec des rails. Chaque rail comporte classiquement une partie centrale rectiligne et une ou deux ailes qui sont solidaires de la partie centrale mais à une hauteur moindre.

Sur chaque aile est fixé au moins un panneau sandwich et chaque panneau sandwich affleure alors la partie centrale afin de matérialiser le plancher de la cabine.

Chaque panneau sandwich comporte deux couches externes, par exemple en fibres de carbone, et une âme, par exemple une structure en nid d'abeilles.

Chaque panneau sandwich est traversé par une série de perçages et chacun reçoit une vis de fixation qui se visse dans un écrou prévu à cet effet et solidaire de l'aile considérée.

Lorsqu'un panneau sandwich doit être retiré, il est nécessaire de retirer toutes les vis de fixation qui le fixent à la structure. Lorsque le panneau sandwich est désolidarisé de la structure, il peut être retiré. Classiquement, un espace est présent entre la partie centrale de la structure et le flanc du panneau sandwich. Un outil tel qu'un tournevis peut alors être disposé dans l'espace pour agripper le panneau sandwich et le soulever.

Même si un tel assemblage est approprié, l'utilisation d'un outil à bords tranchants peut abîmer le flanc du panneau sandwich et/ou rayer le rail, et il est donc nécessaire de trouver un arrangement différent. Le document WO-A-2007/036673 divulgue un assemblage de l'état de la technique, le document US 2016/0003271 A1 un outil.

### EXPOSE DE L'INVENTION

Un objet de la présente invention est de proposer un assemblage d'un panneau sandwich sur une structure qui est tel que le retrait du panneau sandwich est facilité.

À cet effet, est proposé un assemblage comportant :
- une structure comportant une aile avec une face de réception où ladite aile porte au moins un écrou,
- un panneau sandwich comportant une âme et deux couches externes de part et d'autre de l'âme, où le panneau sandwich vient en appui contre la face de réception, et
- pour chaque écrou, une vis de fixation qui se visse dans l'écrou en traversant le panneau sandwich,
ledit assemblage étant caractérisé en ce que pour au moins un écrou, le panneau sandwich comporte un moyen d'accrochage disposé entre les deux couches externes, en ce que le moyen d'accrochage est traversé par un alésage coaxial avec l'écrou et débouchant au niveau de chaque couche externe, en ce que le diamètre de l'alésage est supérieur au diamètre de la tige filetée de la vis de fixation, et en ce que le moyen d'accrochage comporte à l'intérieur de l'alésage, des moyens de fixation destinés à assurer une fixation amovible d'un outil dans ledit alésage.

Avec un tel arrangement, il est possible de manipuler le panneau sandwich sans risque de l'abîmer.

Avantageusement, les moyens de fixation prennent la forme d'un taraudage de l'alésage. Avantageusement, le moyen d'accrochage comporte sur sa périphérie des ailettes. L'invention propose également un aéronef comportant un assemblage selon l'une des variantes précédentes, où le panneau sandwich forme un plancher dudit aéronef.

L'invention propose également un outil destiné à être mis en œuvre avec un assemblage selon l'une des variantes précédentes, ledit outil comportant des moyens de fixation complémentaires destinés à assurer une fixation amovible auxdits moyens de fixation et un sabot destiné à venir en appui contre une surface d'appui de la structure et un bras de levier monté articulé sur le sabot, dont une première extrémité est montée articulée sur les moyens de fixation complémentaires et dont une deuxième extrémité s'étend au-delà du support par rapport aux moyens de fixation complémentaires.

Avantageusement, l'outil comporte une poignée solidaire des moyens de fixation complémentaires.

Avantageusement, l'outil comporte un sabot destiné à venir en appui contre une surface d'appui de la structure et un bras de levier monté articulé sur le sabot, dont une première extrémité est montée articulée sur les moyens de fixation complémentaires et dont une deuxième extrémité s'étend au-delà du support par rapport aux moyens de fixation complémentaires.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en coupe d'un assemblage selon l'invention,
Fig. 2 est une vue en perspective d'un moyen d'accrochage mis en œuvre dans l'assemblage de la Fig. 1, et
Fig. 3 est une vue de côté d'un assemblage selon l'invention avec un outil approprié au soulèvement d'un panneau sandwich.

### EXPOSÉ DÉTAILLÉ DE MODES DE RÉALISATION

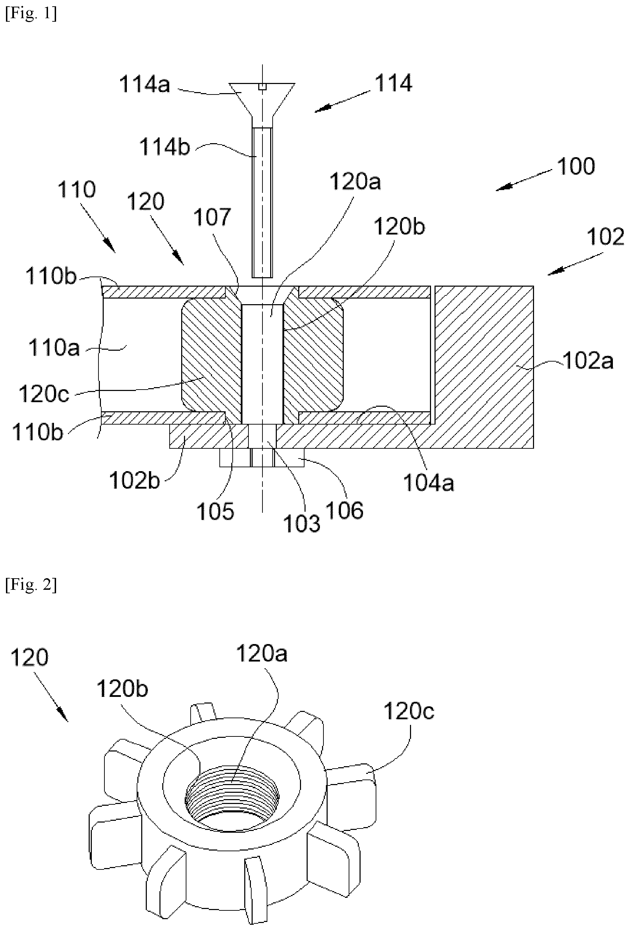

La Fig. 1 montre un assemblage 100 selon l'invention qui est mis en œuvre par exemple dans un aéronef.

L'assemblage 100 comporte une structure 102 qui est par exemple une structure rigide de l'aéronef et qui présente, entre autres, des rails, et chaque rail comporte ici une partie centrale 102a qui est généralement rectiligne et une ou deux ailes 102b qui sont solidaires de la partie centrale 102a mais à une hauteur moindre pour former une marche descendante entre la partie centrale 102a et chaque aile 102b.

Dans la suite de la description, il est fait mention d'une seule aile 102b, mais la description s'applique de la même manière pour chaque aile 102b.

L'aile 102b présente une face de réception 104a qui est orientée sur la Fig. 1 vers le haut et l'aile 102b porte au moins un écrou 106. Dans le mode de réalisation de l'invention présenté sur la Fig. 1, l'écrou 106 est fixé par exemple par soudure, sous l'aile 102b qui présente alors un perçage 103 qui traverse l'aile et est coaxial avec l'axe de l'écrou 106 pour permettre le passage d'une vis de fixation 114 comme expliqué ci-dessous. Mais, il est possible d'envisager une mise en œuvre différente, par exemple l'écrou 106 peut être intégré directement à l'aile 102b et le perçage 103 prend alors la forme d'un trou taraudé.

L'assemblage 100 comporte également un panneau sandwich 110 qui comporte une âme 110a, typiquement une structure en nid d'abeilles et deux couches externes 110b qui sont disposées de part et d'autre de l'âme 110a, c'est-à-dire ici au-dessus et au-dessous, et qui sont rigidement liées à l'âme 110a, par exemple par collage.

En position assemblée, le panneau sandwich 110, et plus particulièrement une des couches externes 110b, est en appui contre la face de réception 104a de l'aile 102b qui porte ainsi le panneau sandwich 110 qui forme ainsi un plancher de l'aéronef. Il y a plusieurs écrous 106 répartis le long de l'aile 102b pour assurer la fixation du panneau sandwich 110 à l'aile 102b. Pour chaque écrou 106, l'assemblage 100 comporte une vis de fixation 114 avec une tête 114a et une tige filetée 114b, où la tige filetée 114b de la vis de fixation 114 se visse dans l'écrou 106 en traversant le panneau sandwich 110 et en prenant en sandwich le panneau sandwich 110 entre l'aile 102b et la tête 114a de la vis de fixation 114 et où la tige filetée 114b traverse ici le perçage 103 pour se visser à l'écrou 106.

Pour au moins un écrou 106, le panneau sandwich 110 comporte un moyen d'accrochage 120 qui est mieux vu en perspective à la Fig. 2. Le moyen d'accrochage 120 est disposé entre les deux couches externes 110b, c'est-à-dire dans l'âme 110a. Typiquement, le moyen d'accrochage 120 est mis en place lors de la fabrication du panneau sandwich 110. Le moyen d'accrochage 120 est placé dans l'âme 110a avant la mise en place et la fixation des couches externes 110b puis, lorsque ces dernières sont mises en place et fixées, le moyen d'accrochage 120 se retrouve enfermé dans le panneau sandwich 110. Comme expliqué ci-dessous, le moyen d'accrochage 120 est ainsi solidement ancré dans le panneau sandwich 110 pour permettre de soulever ce dernier en cas de besoin.

Le moyen d'accrochage 120 présente un corps 121 qui prend ici la forme d'un anneau qui est traversé par un alésage 120a coaxial avec l'écrou 106 lorsque le panneau sandwich 110 est en position de fixation.

L'alésage 120a débouche au niveau de chaque couche externe 110b grâce à des ouvertures 105 que chaque couche externe 110b présente à cet effet. Dans le mode de réalisation de l'invention présenté à la Fig. 1, le moyen d'accrochage 120 s'étend dans les ouvertures 105 et l'une de ses extrémités présente ici un trou fraisé 107 pour y loger la tête 114a.

Lorsque la vis de fixation 114 est mise en place, sa tige filetée 114b s'enfonce ainsi dans l'alésage 120a pour atteindre l'écrou 106.

Pour éviter les interactions entre la vis de fixation 114 et l'alésage 120a, le diamètre de l'alésage 120a est supérieur au diamètre de la tige filetée 114b de la vis de fixation 114.

Le moyen d'accrochage 120 comporte également à l'intérieur de l'alésage 120a, des moyens de fixation 120b qui sont destinés à assurer une fixation amovible d'un outil dans l'alésage 120a.

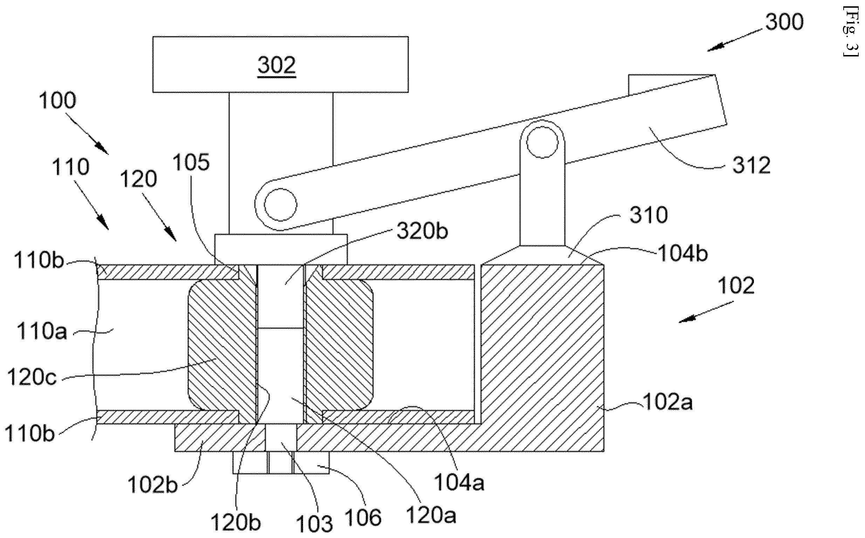

La Fig. 3 montre un exemple d'un outil 300 utilisé pour soulever le panneau sandwich 110. L'outil 300 présente des moyens de fixation complémentaires 320b destinés à assurer une fixation amovible aux moyens de fixation 120b, c'est-à-dire que les moyens de fixation 120b et les moyens de fixation complémentaires 320b peuvent être solidarisés les uns avec les autres puis désolidarisés sans destruction ni des uns, ni des autres.

Dans le mode de réalisation de l'invention présenté ici, les moyens de fixation 120b prennent la forme d'un taraudage de l'alésage 120a et les moyens de fixation complémentaires 320b prennent la forme d'une tige filetée qui se visse audit taraudage de l'alésage 120a.

Dans un autre mode de réalisation non représenté, les moyens de fixation 120b et 320b prennent la forme d'éléments formant des clips.

Lorsque le panneau sandwich 110 doit être soulevé, la vis de fixation 114 est retirée, puis l'outil 300 est approché et les moyens de fixation complémentaires 320b sont solidarisés aux moyens de fixation 120b. Il est alors possible de tirer sur le panneau sandwich 110 en tirant sur l'outil 300 par l'intermédiaire du moyen d'accrochage 120 qui est ancré dans le panneau sandwich 110. Il n'est donc pas nécessaire d'utiliser des outils non appropriés pour amorcer le soulèvement du panneau sandwich 110 et il n'y a donc aucun risque d'abîmer ce dernier. Pour renforcer la cohésion entre le moyen d'accrochage 120 et les couches externes 110b et donc la solidité lors du tirage sur le panneau sandwich, le moyen d'accrochage 120 comporte sur sa périphérie des ailettes 120c qui s'étendent ici radialement autour de l'axe de l'alésage 120a. Les ailettes 120c s'enfoncent ainsi plus profondément entre les couches externes 110b pour augmenter la surface de contact lors du tirage.

Pour aider à la prise en main de l'outil 300 et au tirage, l'outil 300 comporte une poignée 302 solidaire des moyens de fixation complémentaires 320b.

L'outil 300 comporte un sabot 310 qui est mis en appui contre une surface d'appui 104b de la structure 102, ici la surface d'appui 104b est la surface supérieure de la partie centrale 102a. La surface d'appui 104b est une surface où le panneau sandwich 110 est absent.

L'outil 300 comporte également un bras de levier 312 qui est monté articulé sur le sabot 310, ici globalement au milieu dudit bras de levier 312. Une première extrémité du bras de levier 312 est montée articulée sur les moyens de fixation complémentaires 320b et une deuxième extrémité du bras de levier 312 s'étend au-delà du support 310 par rapport aux moyens de fixation complémentaires 320b, c'est-à-dire que le bras de levier 312 s'étend de part et d'autre du sabot 310 et il est fixé d'un côté aux moyens de fixation complémentaires 320b tandis que l'autre extrémité est libre et peut être abaissée par un technicien, par exemple par appui du pied, pour soulever le panneau sandwich 110. Un tel arrangement permet de décupler les efforts de tirage.

## Revendications

1. Assemblage (100) comportant :
- une structure (102) comportant une aile (102b) avec une face de réception (104a) où ladite aile (102b) porte au moins un écrou (106),
- un panneau sandwich (110) comportant une âme (110a) et deux couches externes (110b) de part et d'autre de l'âme (110a), où le panneau sandwich (110) vient en appui contre la face de réception (104a), et
- pour chaque écrou (106), une vis de fixation (114) qui se visse dans l'écrou (106) en traversant le panneau sandwich (110),
ledit assemblage (100) étant **caractérisé en ce que** pour au moins un écrou (106), le panneau sandwich (110) comporte un moyen d'accrochage (120) disposé entre les deux couches externes (110b), **en ce que** le moyen d'accrochage (120) est traversé par un alésage (120a) coaxial avec l'écrou (106) et débouchant au niveau de chaque couche externe (110b), **en ce que** le diamètre de l'alésage (120a) est supérieur au diamètre de la tige filetée (114b) de la vis de fixation (114), et **en ce que** le moyen d'accrochage (120) comporte à l'intérieur de l'alésage (120a), des moyens de fixation (120b) destinés à assurer une fixation amovible d'un outil (300) dans ledit alésage (120a).

2. Assemblage (100) selon la revendication 1, **caractérisé en ce que** les moyens de fixation (120b) prennent la forme d'un taraudage de l'alésage (120a).

3. Assemblage (100) selon l'une des revendications 1 ou 2, **caractérisé en ce que** le moyen d'accrochage (120) comporte sur sa périphérie des ailettes (120c).

4. Aéronef comportant un assemblage (100) selon l'une des revendications 1 à 3, où le panneau sandwich (110) forme un plancher dudit aéronef.

5. Outil (300) destiné à être mis en œuvre avec un assemblage (100) selon l'une des revendications 1 à 3, ledit outil (300) comportant des moyens de fixation complémentaires (320b) destinés à assurer une fixation amovible auxdits moyens de fixation (120b) et un sabot (310) destiné à venir en appui contre une surface d'appui (104b) de la structure (102) et un bras de levier (312) monté articulé sur le sabot (310), dont une première extrémité est montée articulée sur les moyens de fixation complémentaires (320b) et dont une deuxième extrémité s'étend au-delà du support (310) par rapport aux moyens de fixation complémentaires (320b).

6. Outil (300) selon la revendication 5, **caractérisé en ce qu'**il comporte une poignée (302) solidaire des moyens de fixation complémentaires (320b).

## Patentansprüche

1. Anordnung (100), welche aufweist:
- eine Struktur (102), welche einen Flügel (102b) mit einer Aufnahmeseite (104a) aufweist, wobei der Flügel (102b) mindestens eine Mutter (106) trägt,
- eine Sandwichplatte (110), die einen Kern (110a) und zwei Deckschichten (110b) beiderseits des Kerns (110a) aufweist, wobei die Sandwichplatte (110) an der Aufnahmeseite (104a) zur Anlage kommt, und
- für jede Mutter (106) eine Befestigungsschraube (114), die durch die Sandwichplatte (110) hindurch in die Mutter (106) eingeschraubt wird,
wobei die Anordnung (100) **dadurch gekennzeichnet ist, dass** für mindestens eine Mutter (106) die Sandwichplatte (110) ein Aufhängemittel (120) aufweist, das zwischen den zwei Deckschichten (110b) angeordnet ist, dadurch, dass das Aufhängemittel (120) von einer Bohrung (120a) durchquert wird, die mit der Mutter (106) koaxial ist und an beiden Deckschichten (110b) mündet, dadurch, dass der Durchmesser der Bohrung (120a) größer als der Durchmesser des Gewindeschaftes (114b) der Befestigungsschraube (114) ist, und dadurch, dass das Aufhängemittel (120) im Inneren der Bohrung (120a) Befestigungsmittel (120b) aufweist, die dazu bestimmt sind, eine lösbare Befestigung eines Werkzeugs (300) in der Bohrung (120a) sicherzustellen.

2. Anordnung (100) nach Anspruch 1, **dadurch gekennzeichnet, dass** die Befestigungsmittel (120b) die Form eines Innengewindes der Bohrung (120a) aufweisen.

3. Anordnung (100) nach einem der Ansprüche 1 oder 2, **dadurch gekennzeichnet, dass** das Aufhängemittel (120) auf seinem Umfang kleine Flügel (120c) aufweist.

4. Luftfahrzeug, welches eine Anordnung (100) nach einem der Ansprüche 1 bis 3 aufweist, wobei die Sandwichplatte (110) einen Fußboden des Luftfahrzeugs bildet.

5. Werkzeug (300), welches dazu bestimmt ist, mit einer Anordnung (100) nach einem der Ansprüche 1 bis 3 verwendet zu werden, wobei das Werkzeug (300) komplementäre Befestigungsmittel (320b) aufweist, die dazu bestimmt sind, eine lösbare Befestigung an den Befestigungsmitteln (120b) sicherzustellen, und einen Haltefuß (310), der dazu bestimmt ist, an einer Anlagefläche (104b) der Struktur (102) zur Anlage zu kommen, und einen an dem Haltefuß (310) angelenkten Hebelarm (312), von dem ein erstes Ende an den komplementären Befestigungsmitteln (320b) angelenkt ist und von dem sich ein zweites Ende, bezogen auf die komplementären Befestigungsmittel (320b), über den Halter (310) hinaus erstreckt.

6. Werkzeug (300) nach Anspruch 5, **dadurch gekennzeichnet, dass** es einen Griff (302) aufweist, der mit den komplementären Befestigungsmitteln (320b) fest verbunden ist.

## Claims

1. Assembly (100) having:
- a structure (102) having a flange (102b) with a receiving face (104a), wherein said flange (102b) bears at least one nut (106),
- a sandwich panel (110) having a core (110a) and two external layers (110b) on either side of the core (110a), wherein the sandwich panel (110) comes to bear against the receiving face (104a), and
- for each nut (106), a fastening screw (114) that is screwed into the nut (106), passing through the sandwich panel (110),
said assembly (100) being **characterized in that**, for at least one nut (106), the sandwich panel (110) has an attachment means (120) disposed between the two external layers (110b), **in that** the attachment means (120) is passed through by a bore (120a) coaxial with the nut (106) and opening at each external layer (110b), **in that** the diameter of the bore (120a) is greater than the diameter of the threaded shank (114b) of the fastening screw (114), and **in that** the attachment means (120) has, inside the bore (120a), fastening means (120b) intended to ensure removable fastening of a tool (300) in said bore (120a).

2. Assembly (100) according to Claim 1, **characterized in that** the fastening means (120b) take the form of a tapping of the bore (120a).

3. Assembly (100) according to either Claim 1 or 2, **characterized in that** the attachment means (120) has fins (120c) on its periphery.

4. Aircraft having an assembly (100) according to one of Claims 1 to 3, wherein the sandwich panel (110) forms a floor of said aircraft.

5. Tool (300) intended to be implemented with an assembly (100) according to one of Claims 1 to 3, said tool (300) having complementary fastening means (320b) intended to ensure removable fastening to said fastening means (120b) and a shoe (310) intended to come to bear against a bearing surface (104b) of the structure (102) and a lever arm (312) mounted articulated on the shoe (310), a first end of which is mounted articulated on the complementary fastening means (320b) and a second end of which extends beyond the support (310) with respect to the complementary fastening means (320b).

6. Tool (300) according to Claim 5, **characterized in that** it has a handle (302) as one with the complementary fastening means (320b).
